# EUROPÄISCHE PATENTSCHRIFT

(11) **EP 1 042 150 B1**
(45) Veröffentlichungstag und Bekanntmachung des Hinweises auf die Patenterteilung: **03.12.2003**
(21) Anmeldenummer: 98958236.6
(22) Anmeldetag: 27.10.1998
(51) Int. Cl.: B60T 13/72

(54) **PNEUMATISCHER BREMSKRAFTVERSTÄRKER MIT VERRINGERTER ANSPRECHKRAFT**
PNEUMATIC POWER BRAKE WITH REDUCED RESPONSE FORCE
SERVOFREIN PNEUMATIQUE A FORCE DE REACTION REDUITE

(30) Priorität: 13.11.1997 DE 19750383
(43) Veröffentlichungstag der Anmeldung: 11.10.2000
(73) Patentinhaber: LUCAS INDUSTRIES PUBLIC LIMITED COMPANY, Solihull B90 4LA (GB)
(72) Erfinder: ZEUNER, Lothar, D-57518 Steineroth (DE); LINDEN, Christoph, D-56179 Vallendar (DE)
(74) Vertreter: Beyer, Andreas, Dr.
(86) Internationale Anmeldenummer: EP9806800
(87) Internationale Veröffentlichungsnummer: WO99025596

(56) Entgegenhaltungen:
- DE-A- 4 441 913
- DE-A- 19 515 848
- DE-A- 19 617 589
- DE-A- 19 643 877
- DE-A- 19 652 875

## Beschreibung

Die vorliegende Erfindung betrifft einen pneumatischen Bremskraftverstärker gemäß dem Oberbegriff des Patentanspruchs 1. Ein solcher Bremskraftverstärker ist beispielsweise aus der DE 44 41 913 A1 bekannt.

Bremskraftverstärker der vorgenannten Art sind zum einen auf herkömmliche Weise direkt mechanisch betätigbar, beispielsweise durch einen Tritt auf ein mit dem Eingangsglied des Bremskraftverstärkers gekoppeltes Bremspedal, und sie sind zum anderen durch einen integrierten elektromagnetischen Aktuator betätigbar, der von einem üblicherweise außerhalb des Bremskraftverstärkers angeordneten elektronischen Steuergerät ansteuerbar ist. Diese Bremskraftverstärker erlauben also neben einer vom Willen eines Fahrers abhängigen Betätigung auch eine automatische, vom Willen des Fahrers unabhängige Betätigung sowie darüber hinaus eine Kombination dieser beiden Betätigungsarten, d.h. eine dem Fahrerwillen überlagerte, automatische Betätigung des Bremskraftverstärkers (sogenannte Bremsassistentfunktion).

Bevor ein pneumatischer Bremskraftverstärker die in ihn eingeleitete Betätigungskraft tatsächlich verstärkt, muß seine Ansprechkraft überwunden werden. Die Ansprechkraft resultiert aus dem Vorhandensein einer oder mehrerer Rückstellfedern, die die im Rahmen einer Betätigung des Bremskraftverstärkers in Betätigungsrichtung verschobenen Bauteile nach Beendigung der Betätigung in ihre Ausgangsstellung zurückführen. Am Beispiel der bereits erwähnten DE 44 41 913 A1 sei dies näher erläutert: Bei einer manuell initiierten Betätigung des Bremskraftverstärkers wird eine Eingangskraft über ein im wesentlichen stabförmiges Eingangsglied in das Steuerventil des Bremskraftverstärkers eingeleitet und dort auf einen Betätigungskolben übertragen. Das Eingangsglied und der Betätigungskolben verschieben sich dabei in Betätigungsrichtung relativ zum Steuerventilgehäuse. Da der Betätigungskolben mechanisch mit dem Anker der Elektromagnetanordnung gekoppelt ist, wird auch der Anker in Betätigungsrichtung verschoben, wodurch ein erster Dichtsitz geöffnet wird, der die Belüftung der Arbeitskammer des Bremskraftverstärkers ermöglicht. Das Eingangsglied und der Anker (in der DE 44 41 913 A1 nicht gezeigt) sind federnd entgegen der Betätigungsrichtung vorgespannt. Das bedeutet, daß zunächst eine der federnden Vorspannung entsprechende Gegenkraft in Betätigungsrichtung aufgebracht werden muß, bevor das Eingangsglied, der Betätigungskolben und der Anker sich in Betätigungsrichtung verschieben und damit den ersten Ventilsitz öffnen können. Diese Gegenkraft wird als die Ansprechkraft des Bremskraftverstärkers bzw. des Steuerventils bezeichnet.

Häufig ist die Rückstellfeder des Ankers zugleich eine Systemrückstellfeder, die den ersten Dichtsitz zurückstellt. Für diese Rückstellaufgabe wird ein erhöhtes Maß an Rückstellkraft benötigt, da die Rückstellfeder des Ankers gegen die Rückstellfeder des dem ersten Dichtsitz zugehörigen Ventilgliedes arbeiten können muß, damit bei einer Zurücknahme des Bremspedals das genannte Ventilglied entgegen der Betätigungsrichtung verschoben und dadurch ein zweiter Dichtsitz geöffnet wird, der eine Verbindung zwischen der Arbeitskammer und der Unterdruckkammer des Bremskraftverstärkers herstellt, so daß der Druck in der Arbeitskammer abgebaut werden kann. Diese Funktion muß immer gewährleistet sein, d.h. weder Reibungskräfte noch entgegenwirkende Federkräfte dürfen die beschriebene Öffnung des zweiten Dichtsitzes verhindern, weshalb üblicherweise ein gewisser Kraftüberschuß in Rückstellrichtung vorgesehen ist. Dieser die einwandfreie Funktion des Steuerventils sichernde Kraftüberschuß führt jedoch zu einer Erhöhung der Ansprechkraft des Steuerventils. Aus Komfortgründen und auch im Sinne einer möglichst feinen Dosierbarkeit der Bremsanlage wird allerdings eine deutlich niedrigere Ansprechkraft gewünscht.

Der Erfindung liegt demnach die Aufgabe zugrunde, einen Bremskraftverstärker mit mechanischer und elektromagnetischer Betätigung bereitzustellen, dessen von einem Benutzer zu überwindende Ansprechkraft spürbar herabgesetzt ist.

Diese Aufgabe ist ausgehend von einem gattungsgemäßen Bremskraftverstärker erfindungsgemäß dadurch gelöst, daß die Einrichtung zum Erfassen einer mittels des mechanischen Eingangsgliedes erfolgenden Betätigung des Steuerventils dann, wenn eine solche Betätigung erfaßt wird, während dieser Betätigung eine Bestromung der Elektromagnetanordnung veranlaßt, deren Stärke so bemessen ist, daß sie zur Verringerung der Ansprechkraft des Steuerventils ausreicht, die vom Bremskraftverstärker entsprechend der Betätigung bereitgestellte Bremskraft jedoch nicht erhöht.

Erfindungsgemäß ist die Bestromung der Elektromagnetanordnung also maximal so stark, daß die durch die Bestromung der Elektromagnetanordnung erzeugte und in Betätigungsrichtung wirkende Kraft gerade der entgegen der Betätigungsrichtung wirkenden Ansprechkraft entspricht. In diesem Fall steht die von einem Fahrer aufgebrachte Betätigungskraft vollständig als Bremskraft zur Verfügung. In Abhängigkeit der von einem Fahrzeughersteller gewünschten Ansprechcharakteristik kann die durch eine Bestromung der Elektromagnetanordnung erreichte Verringerung der Ansprechkraft des Bremskraftverstärkers bzw. seines steuerventils aber auch weniger ausgeprägt sein. Erfindungsgemäß wird somit ein sehr komfortabel und feinfühlig bereits auf geringe Betätigungskräfte ansprechender Bremskraftverstärker erhalten.

Zur Realisierung der erfindungsgemäßen Vorrichtung kann beispielsweise der beim gattungsgemäßen Stand der Technik ohnehin vorhandenen Steuerung ein Schwellenwert vorgeben werden, ab dem die erfindungsgemäße Bestromung der Elektromagnetanordnung einsetzt. Der Schwellenwert kann z.B. eine bestimmte Kraft sein, es kann jedoch auch eine vorbestimmte Verschiebungsstrecke, um die sich ein ausgewähltes Bauteil bewegen muß, als Schwellenwert herangezogen werden. Durch die erfindungsgemäß bei jedem Bremsvorgang erfolgende Benutzung der Elektromagnetanordnung wird als weiterer Vorteil ein Festgehen der Teile der Elektromagnetanordnung vermieden, zu dem es bei geringer Benutzungshäufigkeit potentiell kommen kann.

Gemäß einer bevorzugten Ausgestaltung des erfindungsgemäßen Bremskraftverstärkers unterbleibt die genannte Bestromung der Elektromagnetanordnung während einer Bewegung des Eingangsgliedes entgegen der Betätigungsrichtung, also während einer Rückstellbewegung. Auf diese Weise wirkt während einer Rückstellbewegung die volle Rückstellkraft der vorhandenen Federn auf die zurückzustellenden Bauteile.

Vorteilhaft ist die Stärke der die Ansprechkraft verringernden Bestromung der Elektromagnetanordnung von der Fahrzeuggeschwindigkeit abhängig. Beispielsweise kann die Verringerung der Ansprechkraft bei relativ niedrigen Geschwindigkeiten weniger ausgeprägt sein als bei hohen Geschwindigkeiten, wodurch eine im unteren Geschwindigkeitsbereich zu "giftig" ansprechende Bremsanlage vermieden wird.

Des weiteren kann die genannte Bestromung der Elektromagnetanordnung von der Art der Bremsung abhängig sein. So kann beispielsweise die Verringerung der Ansprechkraft ausgeprägter sein, wenn eine sehr schnell eingeleitete Bremsung erfaßt wird, um ein möglichst schnelles Ansprechen der Bremsanlage zu erreichen. Dagegen kann bei einer langsamen, leichten Bremsung die Verringerung der Ansprechkraft weniger stark ausfallen, um das Ansprechverhalten der Bremsanlage komfortabler zu gestalten.

Gemäß einer Weiterbildung des erfindungsgemäßen Bremskraftverstärkers kann die Stärke der genannten Bestromung der Elektromagnetanordnung fahrerspezifisch variieren, d.h. die Verringerung der Ansprechkraft richtet sich nach der über einen längeren Zeitraum festgestellten Art der Betätigung der Bremsanlage durch den Fahrer. Beispielsweise kann dann bei einem Fahrer, der die Bremsanlage überwiegend mit relativ starkem Druck betätigt, die Verringerung der Ansprechkraft weniger stark sein als bei einem Fahrer, der die Bremsanlage überwiegend eher zaghaft betätigt. Die genannte Einrichtung zum Erfassen einer mittels des mechanischen Eingangsgliedes erfolgenden Betätigung weist dazu vorteilhaft einen Lernalgorithmus auf, der in einem Mikroprozessor abgelegt ist. Der Lernalgorithmus erstellt in Zusammenarbeit mit geeigneten Sensoren eine fahrerspezifische Betätigungscharakteristik, in Abhängigkeit derer dann die Bestromung der Elektromagnetanordnung angepaßt und gegebenenfalls variiert wird.

Geeignete Sensoren zur Erfassung einer fahrerspezifischen Betätigungscharakteristik sind beispielsweise ein Hydraulikdrucksensor in einem dem Bremskraftverstärker nachgeschalteten Hauptzylinder oder ein mit einem Bremspedal verbundener Kraftsensor oder ein Bewegungssensor im Bremskraftverstärker oder auch ein Drucksensor im Bremskraftverstärker. Vorteilhaft umfaßt die Einrichtung zum Erfassen einer mittels des mechanischen Eingangsgliedes erfolgenden Betätigung des Steuerventils bzw. des Bremskraftverstärkers eine Kombination der vorgenannten Sensoren.

Ein Grundwert für die genannte, die Ansprechkraft verringernde Bestromung der Elektromagnetanordnung kann beispielsweise bereits während der Produktion des erfindungsgemäßen Bremskraftverstärkers ermittelt werden. Hierzu kann etwa nach dem Zusammenbau eines erfindungsgemäßen Bremskraftverstärkers ein typischer Funktionszustand ohne Bestromung der Elektromagnetanordnung simuliert werden, was die Messung der Ansprechkraft dieses Bremskraftverstärkers gestattet. Leicht läßt sich dann ein Stromwert für die Elektromagnetanordnung festlegen, der die gemessene Ansprechkraft auf eine gewünschte Ansprechkraft reduziert. Auf diese Weise können alle Bremskraftverstärker einer Serie unabhängig von produktionsbedingten Toleranzen auf eine bestimmte Ansprechkraft eingestellt werden.

Alternativ kann gemäß einer Weiterbildung des erfindungsgemäßen Bremskraftverstärkers die Ansprechkraft auch selbsttätig ermittelt werden, beispielsweise durch einen Vergleich der in den Bremskraftverstärker eingeleiteten Eingangskraft mit dem daraus resultierenden Hydraulikdruck in einem dem Bremskraftverstärker nachgeschalteten Hauptzylinder. Diese selbsttätige Ermittlung der Ansprechkraft kann im eingebauten Zustand des Bremskraftverstärkers, also im Fahrzeug erfolgen. Bevorzugt werden zur Ermittlung der eingeleiteten Kraft und dem daraus resultierenden Hydraulikdruck die oben genannten Sensoren verwendet, die auch der Ermittlung fahrerspezifischer Parameter dienen.

Die erfindungsgemäße Verringerung der Ansprechkraft eines Bremskraftverstärkers durch die genannte Bestromung der Elektromagnetanordnung ist nicht auf bestimmte Bremskraftverstärkerbauarten beschränkt, erforderlich ist lediglich das Vorhandensein einer Elektromagnetanordnung.

Ein Ausführungsbeispiel eines erfindungsgemäßen Bremskraftverstärkers wird im folgenden anhand der schematischen Figuren näher erläutert. Es zeigt:
- Fig. 1: einen Längsschnitt durch einen erfindungsgemäßen Bremskraftverstärker, und

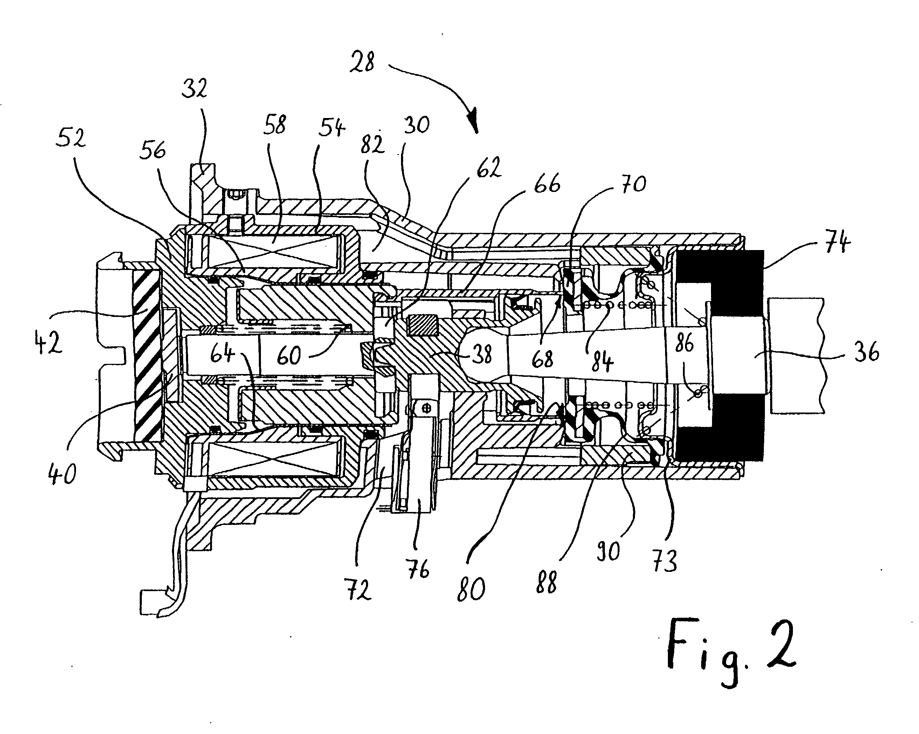

- Fig. 2: einen Längsschnitt durch das Steuerventil des Bremskraftverstärkers aus Fig. 1 in vergrößerter Darstellung.

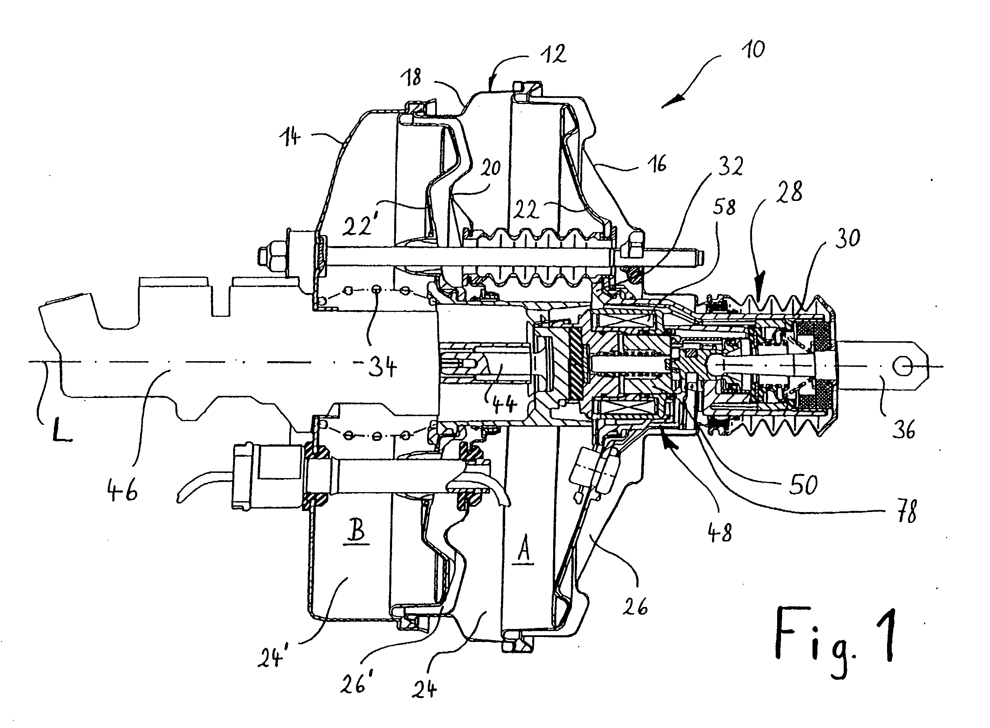

Fig. 1 zeigt einen Unterdruckbremskraftverstärker 10 in sogenannter Tandembauweise. Der Bremskraftverstärker 10 hat ein im wesentlichen zu einer Achse L rotationssymmetrisches Verstärkergehäuse 12, das aus zwei Halbschalen 14 und 16 sowie einem ringförmigen Zwischenstück 18 gebildet ist. Der Innenraum des Verstärkergehäuses 12 ist durch eine starre Wand 20 in einen Teilraum A und einen Teilraum B getrennt. Jeder der Teilräume A und B wird durch je eine bewegliche, längs der Achse L verschiebbare Wand 22, 22' in eine Unterdruckkammer 24, 24' und eine Arbeitskammer 26, 26' unterteilt. Im folgenden wird nur der Teilraum A mit seiner beweglichen Wand 22 näher beschrieben; die Funktion des Teilraums B entspricht jedoch derjenigen des Teilraums A.

In das Verstärkergehäuse 12 ragt längs der Achse L ein Steuerventil 28 zum Steuern einer auf die bewegliche Wand 22 einwirkenden pneumatischen Druckdifferenz. Das Steuerventil 28 hat ein Steuerventilgehäuse 30 und ist verschieblich und abdichtend in einem axial nach außen stehenden, zylindrischen Hals des Verstärkergehäuses 12 aufgenommen. Im Teilraum A des Verstärkergehäuses 12 ist die bewegliche Wand 22 an einem umlaufenden Radialflansch 32 des Steuerventilgehäuses 30 abdichtend und kraftübertragend befestigt. Eine Rückstellfeder 34 spannt das Steuerventilgehäuse 30 samt der beweglichen Wand 22 in die gezeigte Ausgangsstellung vor.

Das Steuerventil 28 und damit der Bremskraftverstärker 10 ist mit einem axial in das Steuerventilgehäuse 30 ragenden, mechanischen Eingangsglied 36 betätigbar, das im Steuerventil 28 auf einen Betätigungskolben 38 wirkt und dessen anderes Ende beispielsweise mit einem hier nicht dargestellten Bremspedal verbunden ist. Der Betätigungskolben 38 durchsetzt das Steuerventilgehäuse 30 und überträgt die durch das Eingangsglied 36 eingeleitete Betätigungskraft auf eine sogenannte Fühlscheibe 40, die in einer entsprechenden Ausnehmung eines Ankergegenstücks einer im folgenden näher erläuterten Elektromagnetanordnung aufgenommen ist. Die Fühlscheibe 40 wiederum wirkt auf eine gummielastische Reaktionsscheibe 42 größeren Durchmessers, die ebenfalls in dem Ankergegenstück aufgenommen ist und die die Betätigungskraft auf einen Eingangskolben 44 eines hier nur im Umriß dargestellten hydraulischen Hauptzylinders 46 überträgt, der an der unterdruckseitigen Verstärkergehäusehälfte angebracht ist.

Zur automatischen, d.h. vom Willen eines Fahrers unabhängigen Betätigung des Bremskraftverstärkers 10 weist das Steuerventil 28 eine Elektromagnetanordnung 48 auf, die in einem stufenförmig erweiterten Teil des Steuerventilgehäuses 30 aufgenommen ist und die einen hohlzylindrischen Anker 50, ein Ankergegenstück 52, ein mit dem Ankergegenstück 52 starr verbundenes Spulengehäuse 54, und eine in dem Spulengehäuse 54 aufgenommene, von einem Spulenhalter 56 getragene Spule 58 umfaßt, die den Anker 50 ringförmig umgibt. Die Elektromagnetanordnung 48 ist koaxial zum Betätigungskolben 38 angeordnet und wird von letzterem durchsetzt. Eine radial zwischen dem Betätigungskolben 38 und dem Anker 50 angeordnete Druckfeder 60 spannt den Anker 50 in Richtung auf das Eingangsglied 36, d.h. entgegen der Betätigungsrichtung vor. Über einen radial vorspringenden Ringbund 62 ist der Betätigungskolben 38 in Betätigungsrichtung mit dem Anker 50 gekoppelt. Radial zwischen dem Anker 50 und dem Spulengehäuse 54 bzw. dem Spulenhalter 56 befindet sich eine dünnwandige Trennhülse 64 aus nichtmagnetischem Material, auf deren Innenfläche der Anker 50 axial gleiten kann.

Auf der dem Eingangsglied 36 zugewandten Stirnseite des Ankers 50 ist eine sich koaxial zur Achse L erstreckende Hülse 66 starr befestigt, an derem freien Ende ein erster ringförmiger Ventilsitz 68 ausgebildet ist. Der erste Ventilsitz 68 wirkt mit einem ringförmigen ventilglied 70 zusammen und verbindet in offenem Zustand über einen radialen Kanal 72 die Arbeitskammer 26 mit Atmosphärendruck (oder Überdruck), der durch ein in einem Halteelement 73 aufgenommenen Luftfiltereinsatz 74 von außen in das Steuerventilgehäuse 30 einströmen kann. Durch den radialen Kanal 72 des Steuerventilgehäuses 30 ragt ein am Betätigungskolben 38 befestigter Querriegel 76, der bei einer Betätigung des Steuerventils 28 die axiale Relativbewegung des Betätigungskolbens 38 gegenüber dem Steuerventilgehäuse 30 durch Inkontaktkommen mit der in den Figuren linken Seitenwand des Kanals 72 begrenzt und der bei einer Rückkehrbewegung des Betätigungskolbens 38 am Ende eines Bremsvorganges gegen einen in der Verstärkergehäusewand ausgebildeten Anschlag 78 stößt, der die sogenannte Lösestellung (unbetätigte Stellung) des Bremskraftverstärkers 10 definiert.

Am Steuerventilgehäuse 30 ist konzentrisch zum ersten Ventilsitz 68 ein diesen umgebender und ebenfalls ringförmiger, zweiter Ventilsitz 80 ausgebildet, der mit dem Ventilglied 70 zusammenwirkt und in offenem Zustand über einen Ringkanal 82 die Unterdruckkammer 24 mit der Arbeitskammer 26 verbindet. Das Ventilglied 70 wird von einer Druckfeder 84 gegen den ersten Ventilsitz 68 und den zweiten Ventilsitz 80 gedrückt, die sich an einem radial nach innen ragenden Flansch des Halteelementes 73 abstützt. Eine weitere Druckfeder 86, die sich mit ihrem einen Ende an dem Halteelement 73 und mit ihrem anderen Ende am mechanischen Eingangsglied 36 abstützt, spannt das Eingangsglied 36 entgegen der Betätigungsrichtung vor.

In dem gezeigten Ausführungsbeispiel ist das Ventilglied 70 mit einem einstückig angeformten gummielastischen Balg 88 versehen, dessen freier Rand verdickt ausgebildet und zwischen einer Stufe des Halteelementes 73 und einem Einsatz 90 dichtend eingeklemmt ist.

Es wird nun die Funktion des Bremskraftverstärkers 10 und insbesondere des Steuerventils 28 näher erläutert. Betätigt der Fahrer das hier nicht dargestellte Bremspedal, muß er zunächst eine Ansprechkraft überwinden, deren Betrag im wesentlichen der durch die Druckfedern 60 und 86 erzeugten und entgegen der Betätigungsrichtung wirkenden Kraft entspricht. Ist diese Ansprechkraft überwunden, so verschieben sich das Eingangsglied 36 und der Betätigungskolben 38 aus der in den Figuren gezeigten Ruhelage relativ zum Steuerventilgehäuse 30 nach links. Über den am Betätigungskolben 38 ausgebildeten Ringbund 62 wird auch der Anker 50 und mit ihm die Hülse 66 in Betätigungsrichtung mitgenommen, so daß der erste Ventilsitz 68 den dichtenden Kontakt zum Ventilglied 70 verliert, wodurch die Verbindung der Arbeitskammer 26 zum Atmosphärendruck geöffnet wird. Luft strömt durch den Luftfiltereinsatz 74, über den ersten Ventilsitz 68 und durch den radialen Kanal 72 in die Arbeitskammer 26 ein, woraufhin sich an der beweglichen Wand 22 ein Differenzdruck aufbaut. Dieser Differenzdruck verschiebt die bewegliche Wand 22 und damit das Steuerventilgehäuse 30 nach links, woraus eine entsprechende Servokraft resultiert, die über den Eingangskolben 44 an den Hauptzylinder 46 weitergeleitet wird.

Beim Lösen des Bremspedals bewegen sich aufgrund der Kräfte der Druckfedern 60 und 86 der Anker 50 und die an ihn gekoppelte Hülse 66, der Betätigungskolben 38 und das Eingangsglied 36 nach rechts zurück, wodurch der erste Ventilsitz 68 wieder in dichtende Anlage mit dem Ventilglied 70 gerät. Anschließend wird aufgrund der Kraft der Druckfedern 60 und 86 das Ventilglied 70 vom zweiten Ventilsitz 80 abgehoben, wodurch die Verbindung zwischen der Unterdruckkammer 24 und der Arbeitskammer 26 geöffnet ist. Weil die Unterdruckkammer 24 ständig mit einer Unterdruckquelle verbunden ist, führt dies zu der gewünschten Differenzdruckabsenkung an der beweglichen Wand 22 und somit zu einer Rücknahme der vom Bremskraftverstärker 10 erzeugten Servokraft. Bei Erreichen einer Gleichgewichtsstellung legt sich der zweite Ventilsitz 80 wieder dichtend an das Ventilglied 70 an.

Eine elektromagnetische Betätigung des Steuerventils 28 verläuft analog. Durch Bestromen der Elektromagnetanordnung 48 entsteht zwischen dem Anker 50 und dem Ankergegenstück 52 ein Kraftfeld, das den Anker 50 gegen die Kraft der Druckfeder 60 in Betätigungsrichtung verschiebt, wodurch der erste Ventilsitz 68 vom Ventilglied 70 abhebt und die Verbindung zwischen der Atmosphäre und der Arbeitskammer 26 öffnet. Wird die Elektromagnetanordnung 48 entregt, schiebt die Druckfeder 60 den Anker 50 und damit den ersten Ventilsitz 68 wieder in dichtende Anlage mit dem Ventilglied 70. Der weitere Ablauf entspricht dem zuvor im Zusammenhang mit einer mechanischen Betätigung erläuterten.

Zur Verringerung der Ansprechkraft ist der Bremskraftverstärker 10 mit einer Einrichtung versehen, die den Beginn einer über das mechanische Eingangsglied 36 erfolgenden Betätigung feststellen kann. Hierzu umfaßt die Einrichtung beispielsweise einen Kraftsensor (nicht gezeigt) am Bremspedal oder am Eingangsglied 36, der mit einem Steuergerät (nicht gezeigt) für die Elektromagnetanordnung 48 in Verbindung steht. Sobald die Einrichtung den Beginn einer Betätigung feststellt, gibt der Kraftsensor oder ein anderer zur Ermittlung des Betätigungsbeginns geeigneter Sensor ein Signal an das Steuergerät der Elektromagnetanordnung 48, woraufhin das Steuergerät die Spule 58 etwas erregt. Die Stärke der Erregung ist dabei so gewählt, daß die Kraft der den Anker 50 rückstellenden Feder 60 zumindest teilweise, höchstens aber vollständig kompensiert wird. Ein Benutzer des Bremskraftverstärkers 10 muß demnach den von der Elektromagnetanordnung 48 aufgebrachten Kraftanteil zur Überwindung der Ansprechkraft nicht mehr aufbringen, so daß für ihn die Ansprechkraft entsprechend erniedrigt ist. Ein Lösen oder Zurücknehmen der Betätigung des Bremskraftverstärkers 10 wird von dem oder den Sensoren ebenfalls erkannt, so daß die genannte Bestromung der Elektromagnetanordnung 48 bei jedweder Rückstellbewegung des Eingangsgliedes 36, des Betätigungskolbens 38 und des Ankers 50 unterbleibt, um die volle Rückstellkraft der Federn 60 und 86 zu nutzen.

Die genannte Bestromung der Elektromagnetanordnung 48 zur Verringerung der Ansprechkraft des Bremskraftverstärkers 10 kann mit einem festen Stromwert geschehen, der die unverringerte Ansprechkraft des Bremskraftverstärkers 10 auf den gewünschten Wert herabsetzt. Ein solcher Stromwert hängt von den Bauteiltoleranzen des Bremskraftverstärkers 10 ab und kann beispielsweise im Rahmen der Herstellung eines Bremskraftverstärkers 10 ermittelt werden.

Wie in der Beschreibungseinleitung ausführlich erläutert, kann der Stromwert im Betrieb des Bremskraftverstärkers 10 aber auch in Abhängigkeit bestimmter Parameter variiert werden. Auch muß die Ermittlung eines Grundwertes der Bestromung nicht während der Produktion eines Bremskraftverstärkers 10 erfolgen, dies kann bei Vorhandensein geeigneter Sensoren auch selbsttätig im eingebauten Zustand geschehen.

## Patentansprüche

1. Pneumatischer Bremskraftverstärker (10) insbesondere für Kraftfahrzeuge, mit
- einem Verstärkergehäuse (12), dessen Innenraum durch zumindest eine bewegliche Wand (22) in eine Unterdruckkammer (24) und eine Arbeitskammer (26) unterteilt ist,
- einem in das Verstärkergehäuse (12) ragenden Steuerventil (28), das nach Überwinden einer entgegen seiner Betätigungsrichtung wirkenden Ansprechkraft eine auf die bewegliche Wand (22) einwirkende pneumatische Druckdifferenz steuert, und das sowohl mittels eines mechanisches Eingangsgliedes (36) als auch, unabhängig davon, mittels einer Elektromagnetanordnung (48) mit einer Spule (58) und einem Anker (50), die relativ zueinander längs der Betätigungsrichtung verschiebbar sind, betätigbar ist, und
- einer Einrichtung zum Erfassen einer mittels des mechanischen Eingangsgliedes (36) erfolgenden Betätigung des Steuerventils (28),
**dadurch gekennzeichnet, daß** die Einrichtung zum Erfassen einer mittels des mechanischen Eingangsgliedes (36) erfolgenden Betätigung des Steuerventils (28) dann, wenn eine solche Betätigung erfaßt wird, während dieser Betätigung eine Bestromung der Elektromagnetanordnung (48) veranlaßt, deren Stärke so bemessen ist, daß sie zur Verringerung der Ansprechkraft des Steuerventils (28) ausreicht, die vom Bremskraftverstärker entsprechend der Betätigung bereitgestellte Bremskraft jedoch nicht erhöht.

2. Bremskraftverstärker nach Anspruch 1,
**dadurch gekennzeichnet, daß** die genannte Bestromung der Elektromagnetanordnung (48) während einer Bewegung des Eingangsgliedes (36) entgegen der Betätigungsrichtung unterbleibt.

3. Bremskraftverstärker nach Anspruch 1 oder 2,
**dadurch gekennzeichnet, daß** in Betrieb die Stärke der genannten Bestromung der Elektromagnetanordnung (48) von der Fahrzeuggeschwindigkeit abhängig ist.

4. Bremskraftverstärker nach einem der Ansprüche 1 bis 3,
**dadurch gekennzeichnet, daß** in Betrieb die Stärke der genannten Bestromung der Elektromagnetanordnung (48) von der Art der Bremsung abhängig ist.

5. Bremskraftverstärker nach einem der vorhergehenden Ansprüche,
**dadurch gekennzeichnet, daß** in Betrieb die Stärke der genannten Bestromung der Elektromagnetanordnung (48) fahrerspezifisch variiert.

6. Bremskraftverstärker nach einem der vorhergehenden Ansprüche,
**dadurch gekennzeichnet, daß** die Einrichtung zum Erfassen einer mittels des mechanischen Eingangsgliedes (36) erfolgenden Betätigung des Steuerventils (28) einen Hydraulikdrucksensor in einem dem Bremskraftverstärker nachgeschalteten Hauptzylinder oder einen mit einem Bremspedal verbundenen Kraftsensor oder einen Bewegungssensor im Bremskraftverstärker oder einen Drucksensor im Bremskraftverstärker oder eine Kombination der vorgenannten Sensoren umfaßt.

7. Bremskraftverstärker nach einem der vorhergehenden Ansprüche,
**dadurch gekennzeichnet, daß** die Ansprechkraft des Steuerventils (28) selbsttätig durch einen Vergleich der in den Bremskraftverstärker eingeleiteten Eingangskraft mit dem daraus resultierenden Hydraulikdruck in einem dem Bremskraftverstärker nachgeschalteten Hauptzylinder ermittelt wird.

## Claims

1. A pneumatic brake booster (10) in particular for motor vehicles, comprising
- a booster housing (12), the interior of which is subdivided by at least one movable wall (22) into a negative pressure chamber (24) and a working chamber (26),
- a control valve (28) which projects into the booster housing (12) and, after a response force acting counter to its operating direction has been overcome, controls a pneumatic pressure difference acting upon the movable wall (22) and which is operable both by means of a mechanical input element (36) and also, independently thereof, by means of an electromagnetic arrangement (48) comprising a coil (58) and an armature (50), which are displaceable relative to one another along the operating direction, and
- a device for detecting an operation of the control valve (28) effected by means of the mechanical input element (36),
**characterised in that** the device for detecting an operation of the control valve (28) effected by means of the mechanical input element (36), once such an operation has been detected, during said operation prompts an energizing of the electromagnetic arrangement (48) of an intensity sufficient to reduce the response force of the control valve (28) yet not increase the braking force provided by the brake booster in accordance with the operation.

2. The brake booster according to claim 1,
**characterised in that** said energizing of the electromagnetic arrangement (48) ceases during a movement of the input element (36) counter to operating direction.

3. The brake booster according to claim 1 or 2,
**characterised in that** during operation the intensity of said energizing of the electromagnetic arrangement (48) is dependent upon the vehicle speed.

4. The brake booster according to one of claims 1 to 3,
**characterised in that** during operation the intensity of said energizing of the electromagnetic arrangement (48) is dependent upon the type of braking.

5. The brake booster according to one of the preceding claims,
**characterised in that** during operation the intensity of said energizing of the electromagnetic arrangement (48) varies in a driver-specific manner.

6. The brake booster according to one of the preceding claims,
**characterised in that** the device for detecting an operation of the control valve (28) effected by means of the mechanical input element (36) comprises a hydraulic pressure sensor in a master cylinder disposed downstream of the brake booster or a force sensor connected to a brake pedal or a motion sensor in the brake booster or a pressure sensor in the brake booster or a combination of the previously described sensors.

7. The brake booster according to one of the preceding claims,
**characterised in that** the response force of the control valve (28) is determined automatically through a comparison of the input force introduced into the brake booster with the resultant hydraulic pressure in a master cylinder disposed downstream of the brake booster.

## Revendications

1. Amplificateur pneumatique de force de freinage (10) notamment pour des véhicules automobiles, comprenant
- un carter d'amplificateur (12) dont l'espace intérieur est divisé par au moins une paroi mobile (22) en une chambre de dépression (24) et une chambre de travail (26),
- une vanne de commande (28) saillant dans le carter d'amplificateur (12), qui commande une différence de pression pneumatique agissant sur la paroi mobile (22) après avoir surmonté une force de réponse agissant dans le sens opposé au sens d'actionnement, et qui est actionnable aussi bien au moyen d'un organe d'entrée mécanique (36) qu'au moyen, indépendamment de ce dernier, d'un dispositif à électroaimants (48) comprenant une bobine (58) et un induit (50) pouvant être translatés l'un par rapport à l'autre suivant la direction d'actionnement, et
- un dispositif pour détecter un actionnement de la vanne de commande (28) se produisant au moyen de l'organe d'entrée mécanique (36),
**caractérisé en ce que** le dispositif pour détecter un actionnement de la vanne de commande (28) se produisant au moyen de l'organe d'entrée mécanique (36) déclenche, lorsqu'un tel actionnement est détecté, une alimentation en courant du dispositif à électroaimants (48) pendant cet actionnement, dont l'ampleur est dimensionnée de manière à ce qu'elle suffit à réduire la force de réponse de la vanne de commande (28), n'augmentant cependant pas la force de freinage fournie par l'amplificateur de force de freinage en fonction de l'actionnement.

2. Amplificateur de force de freinage selon la revendication 1,
**caractérisé en ce que** ladite alimentation en courant du dispositif à électroaimants (48) cesse pendant un mouvement de l'organe d'entrée (36) dans le sens opposé au sens d'actionnement.

3. Amplificateur de force de freinage selon la revendication 1 ou 2,
**caractérisé en ce qu'**en fonctionnement l'ampleur de l'alimentation en courant citée du dispositif à électroaimants (48) est fonction de la vitesse du véhicule.

4. Amplificateur de force de freinage selon la revendication 1 à 3,
**caractérisé en ce qu'**en fonctionnement l'ampleur de l'alimentation en courant citée du dispositif à électroaimants (48) est fonction du type de freinage.

5. Amplificateur de force de freinage selon l'une quelconque des revendications précédentes,
**caractérisé en ce qu'**en fonctionnement l'ampleur de l'alimentation en courant citée du dispositif à électroaimants (48) varie de manière spécifique au conducteur.

6. Amplificateur de force de freinage selon l'une quelconque des revendications précédentes,
**caractérisé en ce que** le dispositif pour détecter un actionnement de la vanne de commande (28) se produisant au moyen de l'organe d'entrée mécanique (36) comprend un capteur de pression hydraulique dans un maître-cylindre monté en aval de l'amplificateur de force de freinage, ou un capteur de force relié à une pédale de frein, ou un capteur de mouvement à l'intérieur de l'amplificateur de force de freinage, ou un capteur de pression à l'intérieur de l'amplificateur de force de freinage, ou une combinaison des capteurs cités plus haut

7. Amplificateur de force de freinage selon l'une quelconque des revendications précédentes,
**caractérisé en ce que** la force de réponse de la vanne de commande (28) est déterminée automatiquement par une comparaison de la force d'entrée introduite dans l'amplificateur de force de freinage avec la pression hydraulique en résultant dans un maître-cylindre monté en aval de l'amplificateur de force de freinage.
